# EUROPÄISCHE PATENTSCHRIFT

(11) **EP 1 693 591 B1**
(45) Veröffentlichungstag und Bekanntmachung des Hinweises auf die Patenterteilung: **30.11.2011**
(21) Anmeldenummer: 05026923.2
(22) Anmeldetag: 09.12.2005
(51) Int. Cl.: F16D 69/02

(54) **Reibbelag**
Friction lining
Garniture de friction

(30) Priorität: 09.02.2005 DE 102005005791
(43) Veröffentlichungstag der Anmeldung: 23.08.2006
(73) Patentinhaber: Schaeffler Technologies GmbH & Co. KG, 91074 Herzogenaurach (DE)
(72) Erfinder: Schwuger, Josef, 91315 Höchstadt (DE)

(56) Entgegenhaltungen:
- EP-A- 0 790 223
- DE-A1- 2 744 725
- DE-A1- 3 122 522
- DE-A1- 3 802 488
- DE-A1- 19 841 618

## Beschreibung

### Gebiet der Erfindung

Die vorliegende Erfindung betrifft einen Reibbelag sowie eine Synchronisationskomponente für ein Getriebe. Die Erfindung betrifft ferner ein Verfahren zur Herstellung eines derartigen Reibbelags und ein Verfahren zur Herstellung einer derartigen Synchronisationskomponente.

### Hintergrund der Erfindung

In Synchronisiereinrichtungen, in denen keilförmige Reibflächen aufeinander wirken, wird zwischen zwei sich berührenden Reibflächen aus verschiedenen Gleitreibwerkstoffen eine Reibpaarung ausgebildet. Hierbei kann es sich bspw. um Sonderwerkstoffkombinationen wie Molybdän/Stahl oder Messing/Stahl oder Sinterwerkstoff-Stahl-Kombinationen handeln. Derartige Lösungen für Reibpaarungen sind hinsichtlich ihrer Leistungsfähigkeit jedoch eingeschränkt. Insbesondere bei hohen Flächenpressungen von 6 bis 12 N/mm² oder hohen Gleitgeschwindigkeiten von 8-12 m/sec oder bei mangelhafter Schmierung weisen derartige Werkstoffe erhebliche Funktionsmängel und eine eingeschränkte Lebensdauer auf.

Aus der EP 0 786 299 B1 ist ein Verfahren zur Herstellung eines Synchronisationsrings mit einem ringförmigen Bauteil und einer auf dem ringförmigen Bauteil ausgebildeten Reibschicht bekannt. Als geeignete Werkstoffe für die Bildung der Reibschicht werden dort sinterfähige Werkstoffe, wie etwa Kohlenstoffpulver, Metallpulver und Kunstharzpulver, und sinterfähige Fasern, wie etwa Kohlenstofffasern genannt. Als nachteilig bei derartigen Werkstoffen werden die hohen Herstellkosten angesehen.

Die DE 3417813 C1 beschreibt einen Reibkörper aus einem Streusinter-Reibbelag und einem Trägerblech, auf das der Reibbelag aufgesintert und durch ein- oder mehrmaliges pressen des Reibkörpers verdichtet ist. Als Reibmaterial werden in dieser Druckschrift metallische und nichtmetallische anorganische Werkstoffe genannt. Dieses Reibmaterial ist auf einen Träger zu kleben. Bei derartig hergestellten Reibkörpern muss von einem relativ hohen Verschleiß ausgegangen werden.

Aus der US 5,337,872 ist es bekannt, ein Keramikmaterial für einen Synchronring mittels Flammspritzens eines Reibmaterials auf einen Träger aufzubringen. Diesem Keramikmaterial ist Aluminium, Aluminiumoxid, Eisen, Kupfer, Magnesium oder Magnesiumoxid beigemengt.

Aus der DE 3122522 A1 ist ein Reibbelag für eine Synchronisiereinrichtung bekannt, der auf Oxid- und/oder Silizid- und/oder Borid- und/oder Karbid- und/oder Nitrid- und/oder Titanatbasis gefertigt ist.

Die DD 278625 A1 beschreibt eine Reibungsschicht für Kupplungen und Bremsen in Maschinen, Fahrzeugen und Schiffen. Ein Ausgangswerkstoff hierfür ist eine CuSn-Legierung mit einem Sn-Anteil von 8-20%. Dieser Legierung werden als Greifkomponente Metalloxide oder mineralische Pulver allein oder im Gemisch in Volumenanteilen zwischen 10 und 60% und als Gleitkomponente Kohlenstoff und Kalziumfluorid in Volumenanteilen zwischen 10 und 60% zugesetzt. Der Ausgangswerkstoff liegt hierbei pulverförmig in den Korngrößen für die CuSn-Legierung von 160-500 um, für die Greifkomponente von 20-45 µm und für die Gleitkomponente von 2-45 µm vor.

Aus der DE 198 41 618 A1 ist ein thermisch gepritzter Synchronisierungsbelag bekannt, welcher mindestens 40 Gew.-% Titandioxid enthält, wobei das Titandioxid vorzugsweise eine Partikelgröße von höchstens etwa 5 µm hat.

Die DE 27 44 725 A1 offenbart eine verschleißfeste Beschichtung von scheibenförmigen Maschinenteilen aus Aluminium oder Aluminiumlegierungen, beispielsweise silizium- oder magnesiumhaltigen Aluminiumlegierungen.

Die DE 38 02 488 A1 betrifft ein Bremsband einer Motorkettensäge. Eine Reibschicht des Bremsbandes kann aus Karbid oder Oxidkeramik gebildet sein.

Die EP 0 790 223 A offenbart ein Verfahren zur Herstellung von Alumina-Aluminid-Composites unter Verwendung einer Al₂O₃-reichen Phase. Mit dem Verfahren hergestellte Formkörper sollen beispielsweise als verschleißfeste Komponenten im Motoren- und Turbinenbau verwendbar sein.

### Aufgabe der Erfindung

Aufgabe der Erfindung ist es, einen Reibbelag, der bei einer Synchronisationskomponente eines Getriebes zum Einsatz kommen kann, bereitzustellen.

### Zusammenfassung der Erfindung

Diese Aufgabe wird gelöst durch einen Reibbelag mit den Merkmalen des Patentanspruchs 1 und durch eine Synchronisationskomponente mit den Merkmalen des Patentanspruchs 11. Die Aufgabe wird ferner gelöst durch ein Verfahren mit den Merkmalen des Patentanspruchs 12.

Der erfindungsgemäße Reibbelag besteht aus einer Oxidkeramikschicht oder weist eine Oxidkeramikschicht auf, wobei diese Oxidkeramikschicht mindestens 2 % Titandioxid (TiO₂) und mindestens 3 % Zirkonsilicat (ZrO₂/SiO₂) enthält (Angaben jeweils in Gew.-%).

Es ist ferner Aluminiumoxid (Al₂O₃) zu einem Anteil von mindestens 10 %, Mullit (Al₂O₃/SiO₂) zu einem Anteil von mindestens 1 %, insbesondere von mindestens 5 %, Aluminium-Magnesiumoxid (Al₂O₃/MgO) zu einem Anteil von mindestens 2 % und Chromit in dem Reibbelag bzw. der Oxidkeramikschicht enthalten.

Mit diesem Reibbelag wird eine Beschichtung bereitgestellt, die für eine Synchronisationskomponente eines Schaltgetriebes oder eine Lamelle eines Automatikgetriebes für Kfz-Anwendungen oder allgemein im Maschinenbau zum Einsatz kommen kann. Der Reibbelag ist verschleißfest und weist hervorragende tribologische Eigenschaften auf. So besitzt der Reibbelag über eine gesamte Lebensdauer bspw. einen konstanten Reibwert. Der erfindungsgemäße Reibbelag kann bspw. auch als eine Beschichtung für eine Bremse zum Einsatz kommen.

Der Reibbelag bzw. die Oxidkeramikschicht des Reibbelags kann des weiteren mindestens einen der nachfolgenden Stoffe oder eine Kombination mehrerer der nachfolgenden Stoffe enthalten: Zirkonoxid (ZrO₂), Spinell (MgAl₂O₄), Aluminiumtitanat (Al₂O₃/TiO₂), Chromoxid (Cr₂O₃), Aluminium (Al) und/oder Kupfer (Cu).

Je nach konkreter Zusammensetzung des Reibbelags bzw. der Oxidkeramikschicht, aus der der Reibbelag ausgebildet ist, können darin unterschiedliche Stoffe zu unterschiedlichen Anteilen enthalten sein.

Gemäß einer besonders bevorzugten Ausführungsform der Erfindung enthält der Reibbelag Titandioxid in einem Anteil von 20-40 Gew.-%.

Es erweist sich in diesem Zusammenhang als vorteilhaft, dem Reibbelag Anteile von Aluminium und Kupfer beizufügen.

Gemäß einer weiteren besonders bevorzugten Ausführungsform der Erfindung weist der Reibbelag Anteile von Zirkonoxid, Aluminiumoxid, Spinell, Aluminiumtitanat, Zirkonsilikat, Mullit und Chromoxid auf.

Des weiteren kann die Oxidkeramikschicht des Reibbelags eine Rauheit von mindestens Rz 1 bis Rz 50 oder alternativ eine Rauheit von mindestens Rz 30 bis maximal Rz 80 aufweisen. Eine Schichthärte der Oxidkeramikschicht und somit des Reibbelags kann sich je nach Zusammensetzung von mindestens 600 HV bis maximal 1200 HV bewegen. Hierbei kann mindestens eine der in der Oxidkeramikschicht enthaltenen Substanzen bzw. mindestens eines der in der Oxidkeramikschicht enthaltenen oder beigemengten Metalloxide eine Schichthärte von mindestens 2000 HV bis 2500 HV aufweisen. Eine Schichtstärke der Oxidkeramikschicht und somit des Reibbelags kann zwischen mindestens 0,02 mm und maximal 0,2 mm, insbesondere zwischen mindestens 0,05 mm und maximal 0,1 mm liegen. Die Oxidkeramikschicht des Reibbelags kann bspw. eine Porosität von mindestens 20 % bis maximal 50 % aufweisen.

Die erfindungsgemäße Synchronisationskomponente für ein Getriebe weist einen erfindungsgemäßen Reibbelag auf und kann bspw. mit einem derartigen Reibbelag beschichtet sein.

Bei einer Anwendung kommt diese mit dem Reibbelag ausgestattete Synchronisationskomponente mit einem Gleitpartner, der eine Härte von mindestens 400 HV bis maximal 650 HV aufweisen kann, in Eingriff oder Berührung. Ein Reibwert zwischen der Synchronisationskomponente und dem Gleitpartner kann zwischen mindestens 0,08 bis maximal 0,12 betragen.

Mit der Synchronisationskomponente und dem Gleitpartner wird somit bspw. eine Reibpaarung für eine Synchronisiereinrichtung in einem Zahnräderwechselgetriebe bereitgestellt. Zur Erzielung eines Gleichlaufs miteinander formschlüssig kuppelbarer Antriebsmittel gehen bspw. ein Synchronring und ein Kuppelring unmittelbar oder über einen zwischen ihnen angeordneten Reibring eine reibschlüssige Verbindung ein. Bei dieser Anwendung kann bspw. der Synchronring als Synchronisationskomponente und der Kuppelring als der Gleitpartner vorgesehen sein. Umgekehrt kann jedoch auch der Kuppelring als Synchronisationskomponente und der Synchronring als Gleitpartner vorgesehen sein. Der erfindungsgemäße Reibbelag ist jeweils als kegelförmige Reibfläche der Synchronisationskomponente ausgebildet.

Mit der Erfindung, also dem Reibbelag bzw. einer Beschichtung, die aus diesem Reibbelag besteht und bei der Synchronisationskomponente zum Einsatz kommt, wird eine Synchronisiereinrichtung bereitgestellt, die verschleißfest ist, hervorragende Reibeigenschaften aufweist und die den hohen Beanspruchungen einer langen Lebensdauer eines Fahrzeugs standhält.

Bei dem Verfahren zur Herstellung eines Reibbelags, insbesondere des erfindungsgemäßen Reibbelags ist vorgesehen, dass ein Körper mit einer Oxidkeramikschicht beschichtet wird. Diese Oxidkeramikschicht ist in der erfindungsgemäßen Weise ausgebildet.

In Ausgestaltung des erfindungsgemäßen Verfahrens wird die Oxidkeramikschicht auf den Körper durch ein Flammspritzverfahren, bspw. ein HVOF-Verfahren aufgespritzt. Alternativ kann die Oxidkeramikschicht zur Herstellung des Reibbelags auf den Körper durch Aufsintern aufgebracht werden. In einem nachfolgenden Verfahrensschritt kann die Oxidkeramikschicht zur Optimierung ihrer Eigenschaften, bspw. ihrer Rauheit, ihrer Schichtstärke, ihrer Porosität und dergleichen durch Diamantschleifen oder Diamantglätten bearbeitet werden.

Bei dem Verfahren zur Herstellung einer Synchronisationskomponente für ein Getriebe ist vorgesehen, dass diese Synchronisationskomponente vorzugsweise mit dem erfindungsgemäßen Reibbelag, der vorzugsweise durch das erfindungsgemäße Verfahren hergestellt wird, beschichtet wird.

Dabei wird die Oxidkeramikschicht direkt auf eine als Reibkonus eines Schaltgetriebes oder als Lamelle eines Automatikgetriebes ausgebildete und für eine Kfz-Anwendung vorgesehene Synchronisationskomponente aufgebracht. Der Reibbelag bzw. eine entsprechende Reibbeschichtung wird vorzugsweise auf einen Körper aus einem nicht wärmebehandelten Werkstoff aufgebracht. Alternativ kann die Oxidkeramikschicht auf ein flexibles Trägermaterial aufgebracht werden, das anschließend auf die als Reibkonus oder Lamelle ausgebildete Synchronisationskomponente durch Kleben befestigt oder durch ein Lötbad fixiert wird.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Die Erfindung wird nachfolgend anhand eines Ausführungsbeispiels näher erläutert. In der dazugehörigen Zeichnung zeigt dabei:
- Figur 1: eine schematische Schnittdarstellung einer bevorzugten Ausführungsform einer Synchronisiereinrichtung, bei der die vorliegende Erfindung anwendbar ist.
- Figur 2: Schaubilder zu einem Laufversuch einer Synchronisationskomponente mit einem erfindungsgemäßen Reibbelag.
- Figur 3: ein Schaubild zu einem Laufverhalten einer Synchronisationskomponente mit einem erfindungsgemäßen Reibbelag.

### Ausführliche Beschreibung der Zeichnungen

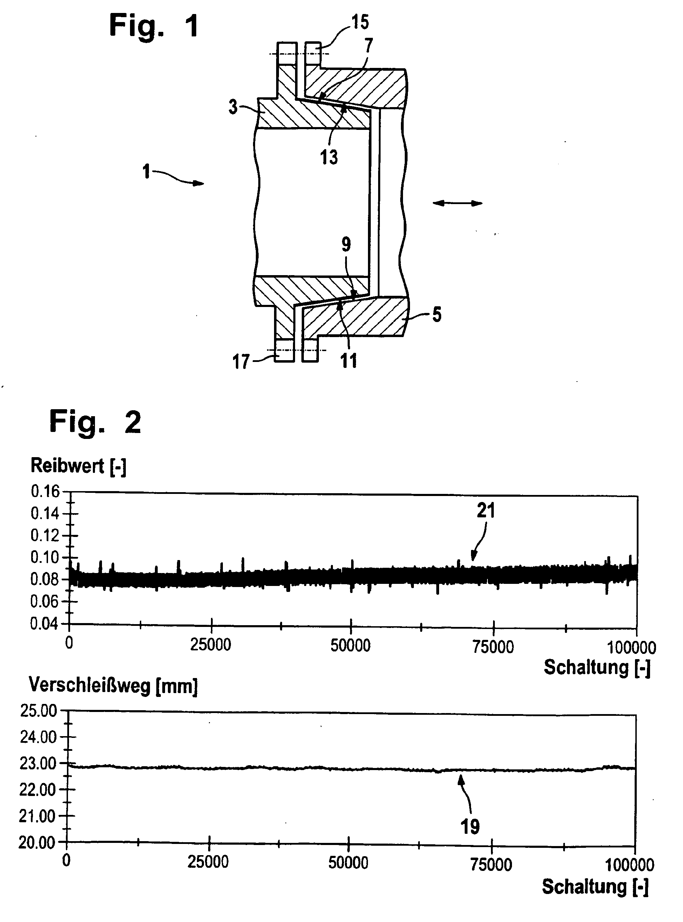

Die in Figur 1 in schematischer Schnittdarstellung gezeigte Synchronisiereinrichtung 1 weist ein Gangrad 3 und einen Synchronring 5 auf. Dieses Gangrad 3 und der Synchronring 5 sind koaxial zueinander angeordnet und können in Richtung des Doppelpfeils relativ zueinander bewegt werden. Das Gangrad 3 ist dabei mit einem Außenkonus 7 und der Synchronring 5 mit einem Innenkonus 9 ausgestattet.

Werden das Gangrad 3 und der Synchronring 5 bei einer Betätigung der Synchronisiereinrichtung 1 aufeinander zu bewegt, kommt der Aussenkonus 7 mit dem Innenkonus 9 in Berührung. Hierbei kommt es zu einer Übertragung von Kräften und/oder Bewegungen zwischen dem Gangrad 3 und dem Synchronring 5. Zur Verbesserung einer Übertragung der Kräfte und/oder Bewegungen ist vorgesehen, eine Synchronisierungskomponente der Synchronisiereinrichtung 1, also entweder das Gangrad 3 an dem Außenkonus 7 oder den Synchronring 5 an dem Innenkonus 9 mit einem Reibbelag 11 zu beschichten. In der vorliegenden Ausführungsform ist das Gangrad 3 als die Synchronisationskomponente vorgesehen und somit dessen Außenkonus 7 mit dem Reibbelag 11 beschichtet. Der Synchronring 5 ist demnach als Gleitpartner der Synchronisationskomponente vorgesehen und weist an dem Innenkonus 9 eine Gleitschicht 13 auf. Des weiteren ist das Gangrad 3 mit einer Mitnehmerverzahnung 17 und der Synchronring 5 mit einer Verzahnung 15 ausgestaltet.

Bei synchronisierten Schalt- oder Wechselgetrieben in Kraftfahrzeugen, die die vorliegende Synchronisiereinrichtung 1 aufweisen, wird beim Schalten des auf einer Welle frei drehbaren Gangrads 3 bzw. Zahnrads durch axiales Anpressen des Synchronrings 5 ein dem Gangrad 3 zugeordneter, nicht dargestellter Kuppelring in einen Gleichlauf mit der Welle gebracht. Dabei erfolgt eine Übertragung der Kräfte von einer auf der Welle drehfesten, aber axial verschiebbaren Schiebemuffe über die axiale oder radiale Mitnehmerverzahnung 17 (Sperrverzahnung) auf den Synchronring 5. Anschließend wird das Gangrad 3 durch ein weiteres axiales Verschieben in Richtung der Schiebmuffe, die dann in einer Mitnehmerverzahnung des Kuppelrings eingreift, formschlüssig mit der Welle verbunden.

Um einen Gleichlauf zwischen dem Synchronring 5 und dem Gangrad 3 zu erreichen, weist das Gangrad 3 an dem Außenkonus 7 die Reibfläche 11 auf, die bei einem axialen Anpressen des Synchronrings 5 mit der entsprechenden Gegenfläche am Innenkonus 9 in Kontakt kommt und durch den auftretenden Reibschluss den zum Durchschalten einer formschlüssigen Kupplung erforderlichen Gleichlauf herstellt. In alternativer Ausgestaltung kann bei einer sogenannten Doppelkonussynchronisierung zwischen den Reibflächen, also dem Innenkonus 9 und dem Aussenkonus 7, ein Reibring angeordnet sein.

Eine Übertragung der Kräfte und/oder der Bewegungen zwischen dem Gangrad 3 und dem Synchronring 5 wird durch den Reibbelag 11 begünstigt.

Der Reibbelag 11 ist als Schicht direkt auf der Synchronisierkomponente, also in diesem Fall dem Außenkonus 7 des Gangrads 3 bspw. durch Hochgeschwindigkeitsflammspritzen aufgebracht. Alternativ kann der Reibbelag 11 auch auf einem flexiblen Zwischenbelag, der auf dem Außenkonus 7 befestigt ist, aufgebracht sein.

Der Reibbelag besteht erfindungsgemäß aus einer Oxidkeramikschicht wie sie in der Beschreibungseinleitung beschrieben wurde. Er kann beispielsweise Zirkonoxid, Aluminiumoxid, Spinell, Aluminiumtitanat, Zirkonsilicat, Mollit und/oder Chromoxid aufweisen. Dabei kann der Reibbelag aus einzelnen dieser Komponenten oder auch einer Mischung einzelner oder aller Komponenten bestehen.

In einer Ausgestaltung kann der Reibbelag 11 oder eine entsprechende Reibschicht mindestens 10 % Aluminiumoxid (Al₂O₃), mindestens 1%, insbesondere mindestens 5 % Mullit (Al₂O₃/SiO₂), mindestens 3 % Zirkonsilicat (ZrO₂/SiO₂), mindestens 2 % Titandioxid (TiO₂) und/oder mindestens 2 % Aluminium-Magnesiumoxid (Al₂O₃/MgO) enthalten. Des weiteren kann der Reibbelag 11 bzw. die Reibschicht auch Aluminium (Al), Kupfer (Cu) und/oder Chromit enthalten. Außerdem kann dem Reibbelag 11 bzw. der Reibschicht Grauguss, unlegierter Stahl oder auch hochlegierter Stahl, Aluminiumoxid-Titanoxid (Al₂O₃/TiO₂) und/oder stabilisiertes Zirkonoxid (ZrO₂/CaO) beigemengt sein. Es kann vorgesehen sein, dass ein Anteil des Titandioxids (TiO₂) abweichend von der vorgenannten Aufzählung auch zwischen 20 % bis 40 % betragen kann.

Bei einer Herstellung des Reibbelags 11 wird ein nicht wärmebehandelter Körper aus Stahl oder Eisen, in diesem Fall der Gangring 3, an dem Außenkonus 7 mit der Oxidkeramikschicht versehen.

Die Oxidkeramikschicht des Reibbelags 11 weist Rauheiten zwischen Rz 1 bis Rz 50 oder alternativ Rauheiten von Rz 30 bis Rz 80 auf. Eine Schichthärte des Reibbelags 11 liegt zwischen 600-1200 HV, wobei eine Partikelhärte vorstehend genannter Metalloxide zwischen 2000-2500 HV liegt. Eine Schichtstärke des Reibbelags 11 liegt zwischen 0,02 mm bis 0,2 mm, vorzugsweise zwischen 0,05 mm bis 0,1 mm. Die Porosität des Reibbelags 11 beträgt zwischen 30 % bis 50 %.

Zur Herstellung des Reibbelags 11 wird die Oxidkeramikschicht bspw. auf ein flexibles Trägermaterial gespritzt und anschließend auf eine Grundkomponente wie eine Lamelle oder im vorliegenden Fall den Außenkonus 7 des Gangrads 3 geklebt. Alternativ kann die Oxidkeramikschicht des Reibbelags 11 auch direkt auf die Lamelle oder den Außenkonus 7 des Gangrads 3 gespritzt werden. Es ist auch denkbar, den Reibbelag 11 durch Ansintern aufzubringen oder über ein Lötbad zu fixieren.

Der Gleitpartner des Reibbelags 11, in diesem Fall der Innenkonus 9 des Synchronrings 5, ist vorzugsweise als ein Stahlring, der bspw. aus 16MNCR5 oder 80 CR2 besteht, ausgebildet. Dabei kann der Gleitpartner bzw. der Innenkonus 9 zusätzlich oberflächenbeschichtet sein und eine erhöhte Härte von 400-650 HV besitzen. Somit weist der Reibbelag 11 zu dem Gleitpartner, also dem Innenkonus 9 des Synchronrings 5 einen Reibwert von 0,08 bis 0,12 auf. Eine derartige Werkstoffkombination gewährleistet einen sehr geringen Verschleiß über eine gesamte Lebensdauer eines Fahrzeugs, in dem die Synchronisiereinrichtung 1 eingebaut ist.

Dies wird bspw. durch die in Figur 2 gezeigten Schaubilder zu Laufversuchen einer Synchronisationskomponente mit einem erfindungsgemäßen Reibbelag belegt. In dem unteren Schaubild ist eine Kurve eines Verschleißwegs 19 in mm über eine Lebensdauer von 150000 Schaltvorgängen der Synchronisationskomponente aufgetragen. Der Verschleißweg 19 ergibt sich aus einer Schaltgabelposition nach einem Synchronlauf. In dem oberen Schaubild ist über die Anzahl der Schaltungen eine Kurve für einen Verlauf eines Reibwerts 21 eines erfindungsgemäßen Reibbelags bzw. einer erfindungsgemäßen Reibschicht über eine Fahrzeuglebensdauer von 150000 Schaltungen aufgetragen.

Aus diesen beiden Schaubildern geht hervor, dass sich sowohl der Verschleißweg 19 als auch der Reibwert 21 selbst über eine große Anzahl von Schaltungen nur geringfügig ändern. Der Laufversuch wurde bei einer Öltemperatur von 80° C mit der Ölsorte TAF21, unter einer Massenträgheit 0,1 kgm², einer Anzahl von 50 Anlaufschaltungen unter einer Axialkraft von 400 N, bei einer Drehzahl von 650 1/min, bei einer Taktzeit von 3,3 s durchgeführt. In einem weiteren Laufversuch wurden mit dem Reibbelag insgesamt 100005 Schaltungen unter einer Axialkraft von 800 N bei einer Taktzeit von 6,5 s und einer Drehzahl von 130 1/min bei weitgehend konstantem Verschleißweg und weitgehend konstantem Reibwert erreicht.

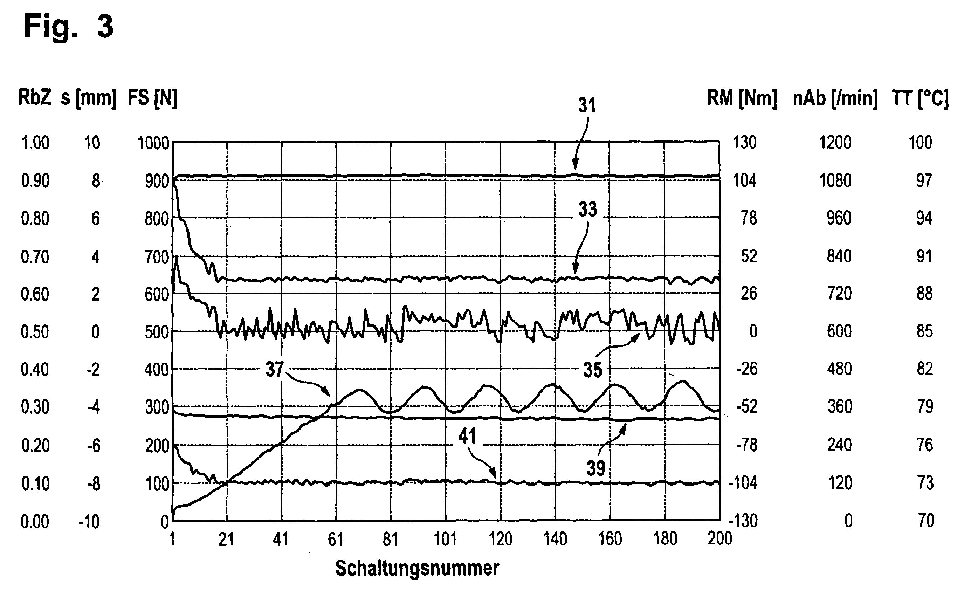

Figur 3 zeigt ein Schaubild mit weiteren Parametern, die ein Einlaufverhalten der Synchronisationskomponente mit einer Keramikbeschichtung begleiten, bei einem Laufversuch über 200 Schaltungen bei einem Hochschalten. Hierbei sind über einer Anzahl der Schaltungen eine Reibungszahl RbZ, Kurve 31, ein Schaltweg s in mm, Kurve 33, eine Schaltkraft FS in N, Kurve 35, ein Reibmoment RM in Nm, Kurve 37, eine Antriebsdrehzahl nAb in 1/min, Kurve 39, und ein Reibwertverlauf, Kurve 41, dargestellt. Die durch die Pfeile angedeuteten Abweichungen der Kurven 33, 35, 41 bei einer Anzahl von weniger als 21 Schaltungen sind durch das Einlaufverhalten der Synchronisationskomponente mit dem erfindungsgemäßen Reibbelag zu begründen.

### Bezugszeichenliste

- 1: Synchronisiereinrichtung
- 2: Gangrad
- 5: Synchronring
- 7: Außenkonus
- 9: Innenkonus
- 11: Reibbelag
- 13: Gleitschicht
- 15: Verzahnung
- 17: Mitnehmerverzahnung
- 19: Verschleißweg (Kurve)
- 21: Reibwert (Kurve)
- 31: Reibungszahl (Kurve)
- 33: Schaltweg (Kurve)
- 35: Schaltkraft (Kurve)
- 37: Reibmoment (Kurve)
- 39: Antriebsdrehzahl (Kurve)
- 41: Reibwertverlauf (Kurve)

## Patentansprüche

1. Reibbelag (11) aus einer Oxidkeramikschich,
**dadurch gekennzeichnet,**
**dass** die Oxidkeramikschicht folgende Stoffe (in Gew.-%) enthält:
- mind. 2 % Al₂O₃/MgO
- Chromit
- mind. 10 % Aluminiumoxid (Al₂O₃)
- mind. 1 % Mullit (Al₂O₃/SiO₂)
- mind. 2 % Titandioxid (TiO₂)
- mind. 3 % Zirkonsilicat (ZrO₂/SiO₂).

2. Reibbelag (11) nach Anspruch 1, der mindestens eine der nachfolgenden Substanzen enthält:
- Zirkonoxid (ZrO₂)
- Spinell (MgAl₂O₄)
- Aluminiumtitanat (Al₂O₃/TiO₂)
- Chromoxid (Cr₂O₃)
- Aluminium (Al)
- Kupfer (Cu).

3. Reibbelag (11) nach einem der Ansprüche 1 oder 2, **dadurch gekennzeichnet, dass** er Titandioxid in einem Anteil von 20-40 Gew.-% enthält.

4. Reibbelag (11) nach einem der vorstehenden Ansprüche, **dadurch gekennzeichnet, dass** er Anteile von Zirkonoxid, Spinell, Aluminiumtitanat und Chromoxid enthält.

5. Reibbelag (11) nach Anspruch 4, **dadurch gekennzeichnet, dass** er Mullit in einem Anteil von wenigstens 5 Gew.-% enthält.

6. Reibbelag (11) nach einem der vorstehenden Ansprüche, **dadurch gekennzeichnet, dass** die Oxidkeramikschicht des Reibbelags (11) eine Rauheit von mindestens Rz 1 bis maximal Rz 50 oder eine Rauheit von mindestens Rz 30 bis maximal Rz 80 aufweist.

7. Reibbelag (11) nach einem der voranstehenden Ansprüche, **dadurch gekennzeichnet, dass** die Oxidkeramikschicht des Reibbelags (11) eine Schichthärte von mindestens 600 HV bis maximal 1200 HV aufweist, wobei mindestens eines der Metalloxide der Oxidkeramikschicht eine Schichthärte von mindestens 2000 HV bis maximal 2500 HV aufweist.

8. Reibbelag (11) nach einem der voranstehenden Ansprüche, **dadurch gekennzeichnet, dass** eine Schichtstärke der Oxidkeramikschicht des Reibbelags (11) zwischen mindestens 0,02 mm und maximal 0,2 mm, insbesondere zwischen mindestens 0,05 mm und maximal 0,1 mm liegt.

9. Reibbelag (11) nach einem der voranstehenden Ansprüche, **dadurch gekennzeichnet, dass** die Oxidkeramikschicht des Reibbelags (11) eine Porosität von mindestens 20% bis maximal 50% aufweist.

10. Synchronisationskomponente für ein Getriebe, die einen Reibbelag (11) nach einem der voranstehenden Ansprüche aufweist.

11. Synchronisationskomponente nach Anspruch 10, die bei einer Anwendung mit einem Gleitpartner (5) mit einer Härte von mindestens 400 HV bis maximal 650 HV in Eingriff kommt und/oder einen Reibwert zu diesem Gleitpartner (5) von mindestens 0,08 bis maximal 0,12 aufweist.

12. Verfahren zur Herstellung eines Reibbelags (11), **dadurch gekennzeichnet, dass** ein Körper (3) mit einer Oxidkeramikschicht gemäß einem der vorstehenden Ansprüche beschichtet wird.

13. Verfahren nach Anspruch 12, **dadurch gekennzeichnet, dass** die Oxidkeramikschicht auf den Körper (3) durch ein Flammspritzverfahren, bspw. ein HVOF-Verfahren, aufgespritzt wird.

14. Verfahren nach Anspruch 12, **dadurch gekennzeichnet, dass** die Oxidkeramikschicht auf den Körper (3) durch Aufsintern aufgebracht wird.

15. Verfahren nach einem der Ansprüche 12 bis 14, **dadurch gekennzeichnet, dass** die Oxidkeramikschicht durch Diamantschleifen oder Diamantglätten bearbeitet wird.

16. Verfahren zur Bereitstellung einer Synchronisationskomponente (3) für ein Getriebe, **dadurch gekennzeichnet dass** diese Synchronisationskomponente (3) mit einem durch ein Verfahren nach einem der Ansprüche 12 bis 15 hergestellten Reibbelag (11) beschichtet wird.

17. Verfahren nach einem der Ansprüche 12 bis 16, **dadurch gekennzeichnet, dass** die Oxidkeramikschicht direkt auf eine als Lamelle oder Reibkonus (7) ausgebildete Synchronisationskomponente (3) aufgebracht wird.

18. Verfahren nach einem der Ansprüche 12 bis 16, **dadurch gekennzeichnet, dass** die Oxidkeramikschicht auf eine flexibles Trägermaterial aufgebracht wird, das anschließend auf die als Lamelle oder Reibkonus (7) ausgebildete Synchronisationskomponente (3) durch Klebung befestigt oder durch ein Lötbad fixiert wird.

## Claims

1. Friction lining (11) comprising an oxide ceramic layer,
**characterized**
**in that** the oxide ceramic layer contains the following compounds (in % by weight):
- at least 2% Al₂O₃/MgO
- chromite
- at least 10% aluminium oxide (Al₂O₃)
- at least 1% mullite (Al₂O₃/SiO₂)
- at least 2% titanium dioxide (TiO₂)
- at least 3% zirconium silicate (ZrO₂/SiO₂).

2. Friction lining (11) according to Claim 1, which contains at least one of the following substances:
- zirconium oxide (ZrO₂)
- spinel (MgAl₂O₄)
- aluminium titanate (Al₂O₃/TiO₂)
- chromium oxide (Cr₂O₃)
- aluminium (Al)
- copper (Cu).

3. Friction lining (11) according to either of Claims 1 and 2, **characterized in that** it contains titanium dioxide in a proportion of 20-40% by weight.

4. Friction lining (11) according to one of the preceding claims, **characterized in that** it contains proportions of zirconium oxide, spinel, aluminium titanate and chromium oxide.

5. Friction lining (11) according to Claim 4, **characterized in that** it contains mullite in a proportion of at least 5% by weight.

6. Friction lining (11) according to one of the preceding claims, **characterized in that** the oxide ceramic layer of the friction lining (11) has a roughness of from at least Rz 1 to at most Rz 50 or a roughness of from at least Rz 30 to at most Rz 80.

7. Friction lining (11) according to one of the preceding claims, **characterized in that** the oxide ceramic layer of the friction lining (11) has a layer hardness of from at least 600 HV to at most 1200 HV, at least one of the metal oxides of the oxide ceramic layer having a layer hardness of from at least 2000 HV to at most 2500 HV.

8. Friction lining (11) according to one of the preceding claims, **characterized in that** a layer thickness of the oxide ceramic layer of the friction lining (11) lies between at least 0.02 mm and at most 0.2 mm, in particular between at least 0.05 mm and at most 0.1 mm.

9. Friction lining (11) according to one of the preceding claims, **characterized in that** the oxide ceramic layer of the friction layer (11) has a porosity of from at least 20% to at most 50%.

10. Synchronization component for a transmission, which synchronization component has a friction lining (11) according to one of the preceding claims.

11. Synchronization component according to Claim 10, which, upon use, comes into engagement with a sliding partner (5) having a hardness of from at least 400 HV to at most 650 HV and/or has a coefficient of friction with respect to said sliding partner (5) of from at least 0.08 to at most 0.12.

12. Method for producing a friction lining (11), **characterized in that** a body (3) is coated with an oxide ceramic layer according to one of the preceding claims.

13. Method according to Claim 12, **characterized in that** the oxide ceramic layer is sprayed onto the body (3) by a flame spraying method, for example an HVOF method.

14. Method according to Claim 12, **characterized in that** the oxide ceramic layer is applied onto the body (3) by sinter-fusing.

15. Method according to one of Claims 12 to 14, **characterized in that** the oxide ceramic layer is machined by diamond grinding or diamond smoothing.

16. Method for providing a synchronization component (3) for a transmission, **characterized in that** said synchronization component (3) is coated with a friction lining (11) which is produced by a method according to one of Claims 12 to 15.

17. Method according to one of Claims 12 to 16, **characterized in that** the oxide ceramic layer is applied directly to a synchronization component (3) which is configured as a multiple disc or friction cone (7).

18. Method according to one of Claims 12 to 16, **characterized in that** the oxide ceramic layer is applied to a flexible carrier material which is subsequently fastened by adhesive bonding or is fixed by a soldering bath to the synchronization component (3) which is configured as a multiple disc or friction cone (7).

## Revendications

1. Garniture de friction (11) constituée d'une couche de céramique d'oxyde,
**caractérisée en ce que**
la couche de céramique d'oxyde contient les substances suivantes (en % en poids) :
- au moins 2 % d'Al₂O₃/MgO,
- du chromite,
- au moins 10 % d'oxyde d'aluminium (Al₂O₃),
- au moins 1 % de mullite (Al₂O₃/SiO₂),
- au moins 2 % de dioxyde de titane (TiO₂) et
- au moins 3 % de silicate de zirconium (ZrO₂/SiO₂).

2. Garniture de friction (11) selon la revendication 1, qui contient au moins l'une des substances suivantes :
- oxyde de zirconium (ZrO₂),
- spinelle (MgAl₂O₄),
- titanate d'aluminium (Al₂O₃/TiO₂),
- oxyde de chrome (Cr₂O₃),
- aluminium (Al) et
- cuivre (Cu).

3. Garniture de friction (11) selon l'une des revendications 1 ou 2, **caractérisée en ce qu'**elle contient du dioxyde de titane à une teneur de 20 à 40 % en poids.

4. Garniture de friction (11) selon l'une des revendications précédentes, **caractérisée en ce qu'**elle contient des teneurs en oxyde de zirconium, en spinelle, en titanate d'aluminium et en oxyde de chrome.

5. Garniture de friction (11) selon la revendication 4, **caractérisée en ce qu'**elle contient de la mullite à une teneur d'au moins 5 % en poids.

6. Garniture de friction (11) selon l'une des revendications précédentes, **caractérisée en ce que** la couche de céramique d'oxyde de la garniture de friction (11) présente une rugosité d'au moins Rz 1 à au plus Rz 50 ou une rugosité d'au moins Rz 30 à au plus Rz 80.

7. Garniture de friction (11) selon l'une des revendications précédentes, **caractérisée en ce que** la couche de céramique d'oxyde de la garniture de friction (11) présente une dureté d'au moins 600 HV à au plus 1 200 HV, l'un des oxydes métalliques de la couche de céramique d'oxyde présentant une dureté de couche d'au moins 2 000 HV à au plus 2 500 HV.

8. Garniture de friction (11) selon l'une des revendications précédentes, **caractérisée en ce que** l'épaisseur de la couche de céramique d'oxyde de la garniture de friction (11) est comprise entre au moins 0,02 mm et au plus 0,2 mm et en particulier entre au moins 0,05 mm et au plus 0,1 mm.

9. Garniture de friction (11) selon l'une des revendications précédentes, **caractérisée en ce que** la couche de céramique d'oxyde de la garniture de friction (11) présente une porosité d'au moins 20 % à au plus 50 %.

10. Composant de synchronisation pour transmission, qui présente une garniture de friction (11) selon l'une des revendications précédentes.

11. Composant de synchronisation selon la revendication 10, qui s'engage en utilisation sur un partenaire de coulissement (5) dont la dureté est d'au moins 400 HV à au plus 650 HV et/ou qui présente un coefficient de frottement d'au moins 0,08 à au plus 0,12 avec ses partenaires de coulissement (5).

12. Procédé de fabrication d'une garniture de friction (11), **caractérisé en ce qu'**un corps (3) est revêtu d'une couche de céramique d'oxyde selon l'une des revendications précédentes.

13. Procédé selon la revendication 12, **caractérisé en ce que** la couche de céramique d'oxyde est pulvérisée sur le corps (3) par un procédé de pulvérisation à la flamme, par exemple un procédé dit HVOF.

14. Procédé selon la revendication 12, **caractérisé en ce que** la couche de céramique d'oxyde est appliquée sur le corps (3) par frittage.

15. Procédé selon l'une des revendications 12 à 14, **caractérisé en ce que** la couche de céramique d'oxyde est usinée par meulage au diamant ou polissage au diamant.

16. Procédé de réalisation d'un composant de synchronisation (3) pour transmission, **caractérisé en ce que** ce composant de synchronisation (3) est revêtu d'une garniture de friction (11) fabriquée à l'aide d'un procédé selon l'une des revendications 12 à 15.

17. Procédé selon l'une des revendications 12 à 16, **caractérisé en ce que** la couche de céramique d'oxyde est appliquée directement sur un composant de synchronisation (3) configuré comme lamelle ou cône de friction (7).

18. Procédé selon l'une des revendications 12 à 16, **caractérisé en ce que** la couche de céramique d'oxyde est appliquée sur un matériau flexible de support qui est ensuite fixé par collage ou par un bain de brasure sur le composant de synchronisation (3) configuré comme lamelle ou comme cône de friction (7).
